# EUROPÄISCHE PATENTSCHRIFT

(11) **EP 3 247 248 B1**
(45) Veröffentlichungstag und Bekanntmachung des Hinweises auf die Patenterteilung: **13.03.2019**
(21) Anmeldenummer: 16701159.2
(22) Anmeldetag: 21.01.2016
(51) Int. Cl.: A47J 43/07, A47J 31/44, G06F 3/0488

(54) **ELEKTRISCH BETREIBBARES KÜCHENGERÄT**
ELECTRICALLY OPERATABLE KITCHEN DEVICE
APPAREIL ÉLECTROMÉNAGER DE PRÉPARATION CULINAIRE

(30) Priorität: 21.01.2015 DE 102015100858
(43) Veröffentlichungstag der Anmeldung: 29.11.2017
(73) Patentinhaber: Vorwerk & Co. Interholding GmbH, 42275 Wuppertal (DE)
(72) Erfinder: WEBER, Klaus-Martin, 42109 Wuppertal (DE); LANG, Torsten, 42657 Solingen (DE)
(74) Vertreter: Müller, Enno
(86) Internationale Anmeldenummer: PCT/EP2016/051226
(87) Internationale Veröffentlichungsnummer: WO 2016/116557

(56) Entgegenhaltungen:
- EP-A1- 2 525 268
- EP-A1- 2 664 971
- EP-A2- 2 574 261
- AT-B- 252 488
- CN-A- 102 087 510
- DE-A1-102010 025 237

## Beschreibung

Die Erfindung betrifft ein elektrisch betreibbares Küchengerät zur Zubereitung von Nahrungsmitteln mittels einer oder mehrerer Einwirkungseinrichtungen, wobei eine Einwirkungseinrichtung mittels eines Dreh- und/oder Druckknopfes aktivierbar und/oder einstellbar ist und das Küchengerät hinsichtlich einer oder zugleich mehrerer oder aller aktivierten Einwirkungseinrichtungen abschaltbar ist.

Derartige Küchengeräte sind z.B. in Form von universellen Küchenmaschinen aus der Praxis gut bekannt, wobei diese elektrischen Küchengeräte neben einem mechanischen Verarbeiten von Nahrungsmitteln, z.B. mittels eines Rührwerks oder Schneidmessers, häufig auch ein Garen der Nahrungsmittel ermöglichen. Zur Herstellung einer entsprechenden Speise sind in der Regel vorbestimmte Rezepte vorgesehen, die mehrere aufeinanderfolgende Rezeptschritte aufweisen.

Ein Küchengerät kann eine oder mehrere Einwirkungseinrichtungen aufweisen, die insbesondere aus einem Rührwerk oder einer Heizeinrichtung bestehen können.

Um dem Benutzer eines derartigen elektrischen Küchengeräts das Herstellen einer Speise nach einem derartigen vorbestimmten Rezept zu ermöglichen, aber auch um das elektrische Küchengerät mit seinen Funktionen direkt anzusteuern, weisen derartige Geräte in der Regel eine Einstelleinrichtung zum benutzerseitigen Einstellen von Verarbeitungsfunktionen auf. Derartige Einstelleinrichtungen sind dabei typischerweise in das elektrische Küchengerät integriert, z.B. in Form von Eingabeknöpfen, Drehreglern oder auch in Form eines Touch-Displays.

Aufgrund eines rotierenden Schneidmessers aber auch durch hocherhitzte Nahrungsmittel kann von einem solchen elektrischen Küchengerät eine Gefahr für den Benutzer oder andere anwesende Personen im Umfeld des elektrischen Küchengeräts ausgehen. Um in einer derartigen Gefahrensituation ein schnelles Abschalten des elektrischen Küchengeräts zu ermöglichen, kann das elektrische Küchengerät einen Notaus-Schalter aufweisen.

Ein derartiger Notaus-Schalter ermöglicht in der Regel ein unmittelbares Abschalten des elektrischen Küchengeräts, um die von dem elektrischen Küchengerät ausgehende Gefahr, z.B. aufgrund des rotierenden Schneidmessers, unmittelbar zu eliminieren. Ein derartiger Notaus-Schalter erfordert jedoch die Anbringung eines zusätzlichen Bedienelements an dem elektrischen Küchengerät, was aufwendig ist und zusätzliche Kosten bedeutet. Darüber hinaus ist ein derartiger Notaus-Schalter auch unter ästhetischen und ergonomischen Gesichtspunkten unerwünscht.

Aus der AT 252488 B ist ein elektrisch betreibbares Küchengerät bekannt, bei welchem ein elektrisch angetriebenes umlaufendes Schneidmesser mittels eines als Drehglied ausgebildeten Schaltgliedes schaltbar ist, wobei durch axiales Verschieben des Drehgliedes eine Not- oder Schnellausschaltung des Antriebes durchführbar ist.

Aus der EP 2 574 261 A2 ist ein elektrisch betreibbares Küchengerät bekannt, das mit einem Drehknopf und einem Touch-Display zum benutzerseitigen Einstellen von Verarbeitungsfunktionen versehen ist.

Ausgehend von dem dargelegten Stand der Technik beschäftigt sich die Erfindung mit der Aufgabenstellung, ein elektrisch betreibbares Küchengerät mit einer günstigen Abschaltbarkeit der Einwirkungseinrichtung anzugeben.

Diese Aufgabe ist beim Gegenstand des Anspruches 1 gelöst, wobei darauf abgestellt ist, dass die Abschaltung der Einwirkungseinrichtung in Abhängigkeit einer Geschwindigkeit, mit welcher der Drehknopf in Richtung seiner Drehachse oder in Drehrichtung oder in Gegendrehrichtung bewegt wird, auslösbar ist. Erfindungsgemäß ist nicht lediglich eine Verstellung in axialer Richtung des Drehknopfes als Kriterium für eine Notausschaltung herangezogen, sondern die Geschwindigkeit, mit welcher diese Verstellung in axialer, alternativ aber auch in Drehrichtung oder Gegendrehrichtung, durchgeführt wird. Hierdurch kann ein eher zufälliges Beaufschlagen des Drehknopfes mit der Folge einer Bewegung in Axialrichtung oder ein übliches Drehen des Drehknopfes in Drehrichtung oder Gegendrehrichtung als Auslöser für eine Not-Ausschaltung ausgenommen werden. Die Einstelleinrichtung des elektrischen Küchengerätes, hier in Form des Drehknopfes, ist mit einer Doppelfunktion belegt: Zum einen dient die Einstelleinrichtung, wie bei herkömmlichen elektrischen Küchengeräten, zum benutzerseitigen Einstellen wenigstens einer der Verarbeitungsfunktionen, zum anderen ist der Dreh- und/oder Druckknopf jedoch auch zusätzlich so ausgestaltet, dass er es ermöglicht, die Einwirkungseinrichtung auszuschalten, insbesondere im Sinne einer Not-Ausschaltung. Darüber hinaus kann auch noch eine übliche Ausschaltung vorgesehen sein. Etwa indem der Drehknopf bis in eine bestimmte Endstellung, die verrastet sein kann, bewegt wird oder indem ein Hauptschalter betätigt wird oder dergleichen.

Mittels des Dreh- und/oder Druckknopfes werden zwei Funktionsklassen von Einstellungen miteinander vereint. Das Vorsehen eines zusätzlichen, separaten Notaus-Schalters ist nicht erforderlich.

Diese unterschiedlichen Funktionsklassen können auf ganz verschiedene Weise bei der entsprechenden Betätigung des Dreh- und/oder Druckknopfes erfasst werden. Gemäß einer bevorzugten Weiterbildung der Erfindung ist vorgesehen, dass der Dreh- und/oder Druckknopf eine erste Erfassungseinrichtung zur Erfassung eines ersten Eingabeparameters und eine zweite Erfassungseinrichtung zur Erfassung eines zweiten Eingabeparameters aufweist, wobei der erste Eingabeparameter von dem zweiten Eingabeparameter verschieden ist und mittels der ersten Erfassungseinrichtung die Einwirkungseinrichtung, etwa im Hinblick auf Wärmeentwicklung, Drehzahl oder dergleichen einstellbar ist und mittels der zweiten Erfassungseinrichtung die Abschaltung, insbesondere die Notaus-Funktion aktivierbar ist. Diese bevorzugte Weiterbildung der Erfindung sieht also vor, dass der Dreh- und/oder Druckknopf mit mehreren Erfassungseinrichtungen zur Erfassung unterschiedlicher Eingabeparameter versehen ist, wobei diese unterschiedlichen Eingabeparameter einerseits für das Einstellen der Verarbeitungsfunktion, also einer Einwirkungseinrichtung andererseits für das Aktivieren der Ausschaltung, der Notaus-Funktion vorgesehen sind.

Prinzipiell kann auch nur eine Erfassungseinrichtung vorgesehen sein, die etwa im Hinblick auf eine erfasste Drehgeschwindigkeit der Drehung des Drehknopfes unterschiedliche Schaltsignale ausgibt oder im Hinblick auf eine Axialgeschwindigkeit, die erfasst wird, unterschiedliche Schaltsignale ausgibt. Bei einer ersten Drehgeschwindigkeit, die innerhalb eines ersten Geschwindigkeitsbereiches angesiedelt ist und/oder bei einer ersten Axialgeschwindigkeit, die innerhalb eines ersten Axialgeschwindigkeitsbereiches angesiedelt ist, kann die erfasste Geschwindigkeit im Sinne einer üblichen Einstellung einer Einwirkungseinrichtung maschinenseitig interpretiert werden und bei einer zweiten Drehgeschwindigkeit, die innerhalb eines zweiten, höheren Geschwindigkeitsbereiches angesiedelt ist und/oder bei einer zweiten Axialgeschwindigkeit, die innerhalb eines zweiten, höheren Axialgeschwindigkeitsbereiches angesiedelt ist, kann eine erfasste Geschwindigkeit im Sinne einer Ausschaltung, insbesondere einer Not-Ausschaltung maschinenseitig interpretiert werden.

Hinsichtlich einer Bewegung des Dreh- und/oder Druckknopfes in einer Axialrichtung, in Richtung der Drehachse bei einem Drehknopf, kann nicht nur die Geschwindigkeit ein Maß sein, mit welcher der Knopf gedrückt wird und sich entsprechend in Axialrichtung bewegt, sondern auch der aufgebrachte Impuls, also das Produkt aus Masse des Knopfes und Geschwindigkeit mit welcher er in Axialrichtung gedrückt wird.

In diesem Zusammenhang ist es besonders bevorzugt, dass ein zweiter Eingabeparameter eine Eigenschaft des benutzerseitigen Einstellens eines ersten Eingabeparameters ist. Dies bedeutet, dass der zweite Eingabeparameter gemäß dieser bevorzugten Weiterbildung davon abhängig ist, wie der erste Eingabeparameter vom Benutzer eingestellt wird. Wird also der erste Eingabeparameter z.B. durch ein Drücken eines Druckknopfes gebildet, so kann der zweite Eingabeparameter vorzugsweise dadurch gegeben sein, wie kräftig der Knopf vom Benutzer gedrückt wird.

In diesem Zusammenhang ist gemäß einer weiter bevorzugten Weiterbildung der Erfindung vorgesehen, dass die Einstelleinrichtung einen Druckknopf aufweist und eine Kraftmesseinrichtung zur Erfassung der auf den Druckknopf benutzerseitig ausgeübten Kraft und dass die Abschaltung oder die Notaus-Funktion bei Erfassung einer Überschreitung einer vorbestimmten Kraft, der Abschalt- oder Notauskraft, aktivierbar ist. Das heißt also, dass der Druckknopf, mit dem ansonsten eine Verarbeitungsfunktion, d. h. konkret eine Einwirkungseinrichtung des elektrischen Küchengerätes, einstellbar ist, auch für die Aktivierung der Ausschaltung bzw. der Notaus-Funktion gedrückt wird, aber auf eine bestimmte Weise, nämlich so kräftig und/oder so schnell, dass die vorbestimmte Ausschaltkraft bzw. Notaus-Kraft und/oder Ausschalt-Geschwindigkeit oder Notaus-Geschwindigkeit, überschritten wird, so dass damit die Ausschalt- bzw. Notaus-Funktion aktiviert wird.

Insbesondere ist auch bevorzugt, dass durch Betätigung des einen Drehschalters in einer der beschriebenen Weise ggf. mehrere Einwirkungseinrichtungen, die aktiviert sind, also bspw. zugleich ein Rührwerk und eine Heizeinrichtung, abgeschaltet werden, bevorzugt im Sinne einer Notaus-Abschaltung.

Insbesondere kann auch vorgesehen sein, dass zufolge einer solchen Betätigung die Küchenmaschine insgesamt stromlos geschaltet wird. Bei einer derartigen Abschaltung, insbesondere also einer Notaus-Abschaltung, kann in Kauf genommen werden, dass gewisse Daten verlorengehen oder sonstige Sicherheitsroutinen beim Abschalten nicht eingehalten werden.

Es wird also durch die Art und Weise, wie die ohnehin für die benutzerseitige Einstellung einer Verarbeitungsfunktion, konkret einer Einwirkungseinrichtung, vorgesehene Einstelleinrichtung bedient wird, erfasst, ob damit die Notaus-Funktion aktiviert werden soll. Dies macht ein und dieselbe Einstelleinrichtung für zwei vollständig unterschiedliche Einstellzwecke einsetzbar, nämlich für die reguläre Einstellung einer Verarbeitungsfunktion bzw. in weiterer Konkretisierung einer Einwirkungseinrichtung des elektrischen Küchengerätes sowie für dessen Abschaltung, insbesondere Not-Abschaltung.

Gemäß einer weiteren bevorzugten Weiterbildung der Erfindung ist vorgesehen, dass in einem Fall, in dem die Einstelleinrichtung einen Druckknopf aufweist, eine Impulsmesseinrichtung zur Erfassung des auf dem Druckknopf benutzerseitig ausgeübten Impulses vorgesehen ist und die Notaus-Funktion, oder eine Abschaltung als solche, bei Erfassung einer Überschreitung eines vorbestimmten Notaus-Impulses (Abschalt-Impulses) aktivierbar ist. Diese bevorzugte Weiterbildung der Erfindung ist ähnlich zu der zuvor beschriebenen, wobei alternativ zu der auf den Druckknopf benutzerseitig ausgeübten Kraft hier der benutzerseitig ausgeübte Impuls erfasst wird.

Grundsätzlich kann der Druckknopf ein derartiger Knopf sein, der sich lediglich drücken lässt, um die in Rede stehenden Funktionen zu generieren, z.B. durch Auswahl eines auf einer Anzeigeeinrichtung angezeigten Menüpunktes. Bevorzugt ist der Druckknopf jedoch ein Druck-/Drehknopf, also ein derartiger Knopf, bei dem nicht nur mittels Drücken, sondern auch mittels Drehen verschiedene Funktionen auslösbar oder ansteuerbar sind. Dies erhöht die Funktionalität der Einstelleinrichtung weiter, ohne dass zusätzliche Einrichtungen wie weitere Knöpfe vorgesehen sein müssen.

Gemäß einer weiteren Weiterbildung der Erfindung ist vorgesehen, dass die Einstelleinrichtung neben dem Druck-/Drehknopf als Benutzerschnittstelle zusätzlich ein Touch-Display aufweist, darüber hinaus jedoch keine weiteren Benutzerschnittstellen. Es hat sich nämlich gezeigt, dass mittels einer Kombination aus Druck-/Drehknopf und Touch-Display als alleinige Benutzerschnittstellen dem Benutzer eine elegante und übersichtliche Bedien- und Einstellmöglichkeit zur Verfügung gestellt werden kann.

Diese Kombination aus Druck-/Drehknopf und Touch-Display zeichnet sich nicht nur durch eine einfache Bedienbarkeit aus, sondern erleichtert auch ein Reinigen des elektrischen Küchengeräts. Beim Einsatz des elektrischen Küchengeräts wird es in der Regel nämlich nicht vermeidbar sein, dass Nahrungsmittel, zumindest in geringen Mengen, nicht nur in einen Verarbeitungsraum des elektrischen Küchengeräts gelangen, sondern auch auf das Gehäuse des elektrischen Küchengeräts bzw. auf die Einstelleinrichtung. Insofern ist es vorteilhaft, wenn die Einstelleinrichtung so wenige erhabene Einrichtungen wie möglich aufweist.

Bei einer Einstelleinrichtung, die ein Touch-Display aufweist, ist es gemäß einer bevorzugten Weiterbildung der Erfindung vorgesehen, dass die Notaus-Funktion mittels eines derartigen benutzerseitigen Berührens des Touch-Displays aktivierbar ist, bei dem die Flächenbedeckung des Touch-Displays eine vorbestimmte Notaus-Flächenbedeckung überschreitet. Mit anderen Worten bedeutet dies, dass die Notaus-Funktion durch ein derartiges Berühren des Touch-Displays durch den Benutzer aktiviert wird, das insofern von einem regulären Berühren des Touch-Displays zum Einstellen einer Verarbeitungsfunktion abweicht, als dass eine erheblich höhere Flächenbedeckung des Touch-Displays erfolgt, nämlich eine über die vorbestimmte Notaus-Flächenbedeckung hinausgehende. Vorzugsweise ist die Notaus-Flächenbedeckung derart dimensioniert, dass sie größer ist als die Fläche, die mit zwei Fingerspitzen eines typischen Benutzers abgedeckt werden kann. Dazu ist eine vorbestimmte Notaus-Flächenbedeckung als eine absolute Flächengröße definiert und hinterlegt. Die Notaus-Flächenbedeckung bzw. Flächengröße ist bspw. ungefähr 2 cm² groß und vorzugsweise größer als ein Fingerabdruck.

Schließlich gilt für alle zuvor beschriebenen bevorzugten Weiterbildungen der Erfindung, dass die Notaus-Funktion vorzugsweise eine unmittelbare Abschaltung des elektrischen Küchengeräts bewirkt, ohne das elektrische Küchengerät ordnungsgemäß herunterzufahren bzw. auszuschalten. Weil mittels der Notaus-Funktion eine unmittelbare Gefahr durch das elektrische Küchengerät eliminiert werden soll, wird vorzugsweise also auf ein reguläres Herunterfahren des Systems des elektrischen Küchengeräts bzw. Ausschalten verzichtet, auch unter Inkaufnahme, dass ein gegenwärtig abgearbeitetes Rezept damit unterbrochen und ggf. vollständig neu begonnen werden muss.

Nachfolgend wird die Erfindung unter Bezugnahme auf die Zeichnung im Einzelnen beschrieben. In Zeichnung zeigen
- Fig. 1: schematisch den Aufbau eines elektrischen Küchengeräts gemäß einem bevorzugten Ausführungsbeispiel der Erfindung;
- Fig. 2: schematisch Details zu dem Druck-Drehknopf des elektrischen Küchengeräts gemäß dem bevorzugten Ausführungsbeispiel der Erfindung;
- Fig. 3a, 3b: Details zu dem Touch-Display des elektrischen Küchengeräts gemäß dem bevorzugten Ausführungsbeispiels der Erfindung;
- Fig. 4: eine konkretisierte Darstellung eines elektrischen Küchengerätes; und
- Fig. 5: eine Querschnittsdarstellung eines Druck-/Drehknopfes des Küchengerätes.

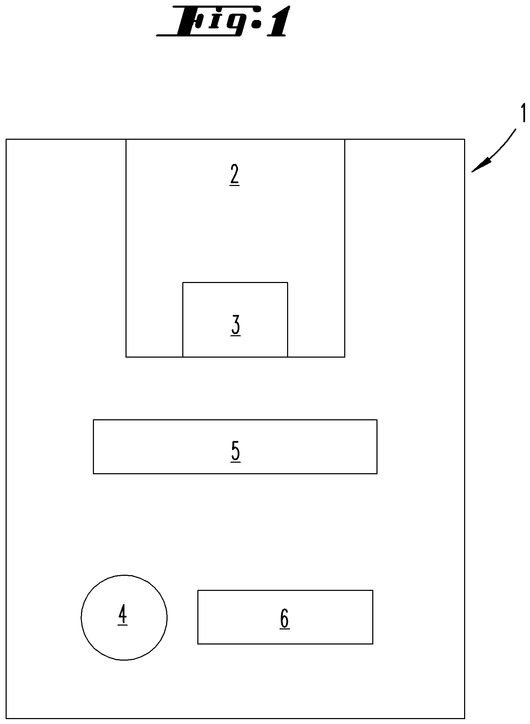

In Fig. 1 ist ein elektrisches Küchengerät gemäß einem bevorzugten Ausführungsbeispiel der Erfindung mit seinen für die vorliegende Erfindung wesentlichen Komponenten gezeigt. Das elektrische Küchengerät 1 weist einen Verarbeitungsraum 2 auf, in dem Nahrungsmittel verarbeitet werden können, und zwar mittels von einem Benutzer einstellbarer Verarbeitungsfunktionen. Zur Verarbeitung der Nahrungsmittel ist in dem Verarbeitungsraum 2 ein Rühr- und Schneidwerk 3 vorgesehen, mit dem zur Herstellung der Speise die Nahrungsmittel in dem Verarbeitungsraum 2 gerührt, geknetet und/oder zerkleinert werden können.

Die Steuerung des elektrischen Küchengeräts 1 erfolgt mittels einer zentralen Steuereinheit 5 (CPU). In das elektrische Küchengerät 1 von dem Benutzer einzugebende Befehle, also das Einstellen von Verarbeitungsfunktionen, erfolgt gemäß dem vorliegend beschriebenen bevorzugten Ausführungsbeispiel der Erfindung mittels eines Druck-/Drehknopfes 4 und eines Touch-Displays 6. Mittels des Druck-/Drehknopfs 4 lassen sich die Anzeigen auf dem Touch-Display 6 verändern, durch Tippen auf das Touch-Display 6 können bestimmte Funktionen ausgewählt werden, und durch Drücken des Druck-/Drehknopfes 4 kann eine gewählte Eingabe betätigt werden.

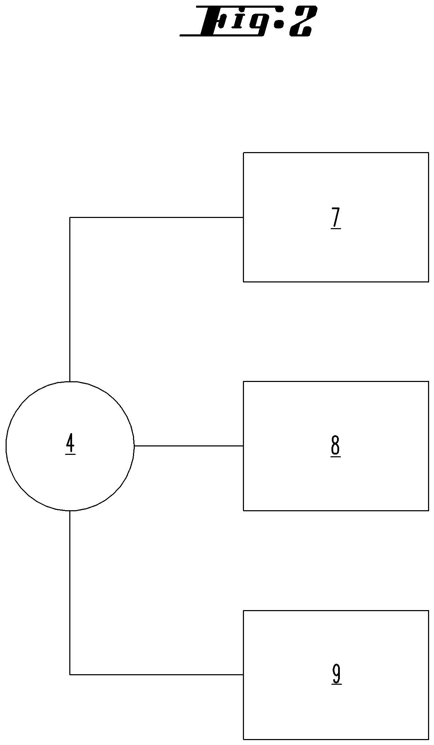

Zur Erfassung eines derartigen Drückens bzw. Drehens des Druck-/Drehknopfes 4 ist dieser, wie in Fig. 2 schematisch dargestellt, mit einer Drückerfassungseinrichtung 7 und einer Dreherfassungseinrichtung 8 versehen. Die Drückerfassungseinrichtung 7 ermittelt dabei, ob der Druck-/Drehknopf 4 gedrückt worden ist, und die Dreherfassungseinrichtung 8 ermittelt, in welche Richtung und wie weit der Druck-/Drehknopf 4 gedreht worden ist. Diese Informationen werden zusammen mit den Darstellungsinformationen für das Touch-Display in der zentralen Steuereinheit 5 zusammengeführt, so dass damit von dem elektrischen Küchengerät 1 erfassbar ist, welche Einstellungen der Benutzer über den Druck-/Drehknopf 4 und das Touch-Display 6 vorgenommen hat.

Zusätzlich zu der Drückerfassungseinrichtung 7 und der Dreherfassungseinrichtung 8 ist der Druck-/Drehknopf 4 des elektrischen Küchengeräts 1 gemäß dem vorliegend beschriebenen bevorzugten Ausführungsbeispiel der Erfindung auch mit einer Krafterfassungseinrichtung 9 versehen. Mit dieser Krafterfassungseinrichtung 9 ist erfassbar, mit welcher Kraft der Druck-/Drehknopf 4 benutzerseitig gedrückt wird. Auch diese Information wird an die Steuereinheit 5 weitergegeben, wo hinterlegt ist, ab welcher erfassten Kraft eine Überschreitung einer vorbestimmten Notaus-Kraft anzunehmen ist.

Wird also mittels der Krafterfassungseinrichtung 9 eine höhere benutzerseitig auf den Druck-/Drehknopf 4 aufgebrachte Kraft als die Notaus-Kraft erfasst, wird eine Notaus-Funktion für das elektrische Küchengerät 1 aktiviert. Mit der Notaus-Funktion ist verbunden, dass das elektrische Küchengerät 1 unmittelbar abgeschaltet wird, und zwar ohne dass die Systeme des elektrischen Küchengeräts 1 zuvor ordnungsgemäß heruntergefahren werden. Auf diese Weise wird sichergestellt, dass durch Aktivierung der Notaus-Funktion von dem Betrieb des elektrischen Küchengeräts 1 keine weitere Gefahr mehr ausgehen kann.

Damit kommt dem Druck-/Drehknopf 4 insofern eine Doppelfunktion zu, als dass dieser nicht nur zur Eingabe bzw. Bestätigung von Verarbeitungsfunktionen für das elektrische Küchengerät 1 nutzbar ist, sondern auch für die Aktivierung einer Notaus-Funktion des elektrischen Küchengeräts 1. Auf diese Weise kann bei dem elektrischen Küchengerät 1 gemäß dem bevorzugten Ausführungsbeispiel der Erfindung vermieden werden, einen separaten, von dem Druck-/Drehknopf 4 getrennten Notaus-Schalter vorzusehen. Damit sind die Bedienelemente auf dem elektrischen Küchengerät 1 reduziert, was unter ästhetischen und ergonomischen Gesichtspunkten vorteilhaft ist.

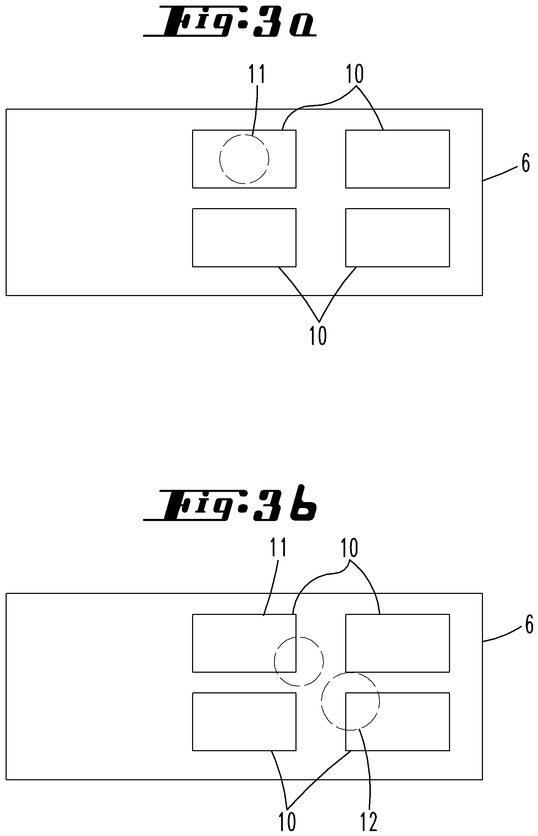

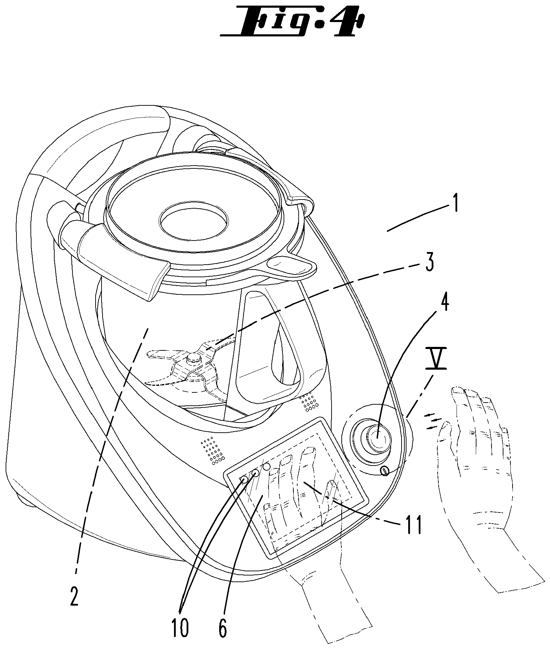

Bei dem elektrischen Küchengerät 1 gemäß dem vorliegend beschriebenen bevorzugten Ausführungsbeispiel der Erfindung gibt es jedoch noch eine zweite Möglichkeit, die Notaus-Funktion zu aktivieren. Dies wird nachfolgend unter Bezugnahme auf die Fig. 3a, 3b und 4 erläutert.

In Fig. 3a ist schematisch gezeigt, wie auf dem Touch-Display 6 Anzeigefelder 10 dargestellt werden, mit denen unterschiedliche auswählbare Funktionen des elektrischen Küchengeräts 1 dem Benutzer angeboten werden. Mittels eines gestrichelten Kreises ist schematisch die Bedeckung 11 des Touch-Displays 6 mit einem Finger des Benutzers dargestellt, um eines der Anzeigefelder 10 anzutippen und die damit verbundene Funktion auf diese Weise auszuwählen. Die Bedeckung 11 mit einem Finger ist bei einem typischen Benutzer immer derart, dass eine bestimmte Flächenbedeckung beim Berühren des Touch-Displays 6 nicht überschritten wird.

Damit verbunden ist nun das Prinzip, eine Notaus-Funktion mittels des Touch-Displays 6 des elektrischen Küchengeräts 1 bereitzustellen. Wie nämlich in den Fig. 3b und 4 dargestellt, kann das Touch-Display 6 auch mit mehr als einem Finger berührt werden. In Fig. 3b ist neben der Bedeckung 11 mit einem ersten Finger auch eine Bedeckung 12 mit einem zweiten Finger dargestellt. Diese Berührungen des Touch-Displays 6 dienen nun nicht dazu, ein bestimmtes Anzeigefeld 10 auszuwählen. Vielmehr soll mit der Berührung des Touch-Displays 6 mit mehr als einem Finger, vorliegend nämlich mit zwei Fingern, die Notaus-Funktion des elektrischen Küchengeräts 1 aktiviert werden.

Wenn die gesamte Fläche des Touch-Displays, die in der Anlage ist auf Berührung bspw. durch einen Finger zu reagieren, mit 100 angesetzt wird, dann ist bevorzugt, dass eine Berührung eines Anteils von 6 oder mehr, wobei hier auch alle ganzzahligen höheren Werte, also 7 oder mehr, 8 oder mehr etc. in die Offenbarung eingeschlossen sind, wobei die Grenze bei 100 ist, für die Auslösung der genannten Abschaltung, insbesondere der Not-Ausschaltung ausreichend ist.

Dazu ist es völlig unerheblich, wo die Finger das Touch-Display 6 berühren, also welche Anzeigefelder 10 angetippt werden bzw. ob überhaupt eines oder mehrere der Anzeigefelder 10 berührt werden. Vielmehr ist in der zentralen Steuereinheit 5, der die Informationen zur Berührung des Touch-Displays 6 zugeführt werden, hinterlegt, dass die Notaus-Funktion des elektrischen Küchengeräts 1 dann aktiviert wird, wenn die erfasste Flächenbedeckung des Touch-Displays 6 eine vorbestimmte Notaus-Flächenbedeckung überschreitet. Vorliegend ist vorgesehen, dass von einer derartigen Überschreitung der vorbestimmten Notaus-Flächenbedeckung auszugehen ist, wenn eine Flächenbedeckung des Touch-Displays 6 erfasst wird, die zwei oder mehr Fingern entspricht. Dazu ist in der zentralen Steuereinheit 5 als absoluter Wert eine Notaus-Flächenbedeckung als absolute Fläche von bspw. 2 cm² hinterlegt. Diese bzw. eine hierfür erforderliche Flächenabdeckung allgemein ist bevorzugt ab Werk für das elektrische Küchengerät 1 voreingestellt.

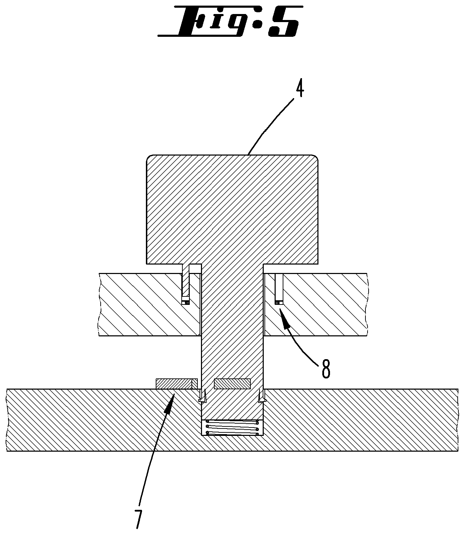

In Fig. 5 ist eine bspw. Querschnittsdarstellung eines Dreh-/Druckknopfes dargestellt. Weiter ist mit dem Bezugszeichen 7 eine Erfassungseinrichtung für eine Drehbewegung in Drehrichtung und/oder eine Bewegung in Axialrichtung der Drehachse schematisch dargestellt. Die dargestellte Einrichtung kann sowohl eine übliche Drehgeschwindigkeit in einem ersten Drehgeschwindigkeitsbereich wie auch eine im Hinblick auf eine Ausschaltung, insbesondere Notausschaltung interpretierbare zweite Drehgeschwindigkeit in einem zweiten Drehgeschwindigkeitsbereich erfassen und darüber hinaus alternativ oder ergänzend eine erste Axialgeschwindigkeit, die bspw. zu einem üblichen Abschalten des Küchengerätes, also mit Herunterfahren von geöffneten Programmen etc. führen kann und eine zweite Axialgeschwindigkeit in einem zweiten Axialgeschwindigkeitsbereich, die zu einer Not-Ausschaltung führen kann erfassen.

### Liste der Bezugszeichen

- 1: elektrisches Küchengerät
- 2: Verarbeitungsraum
- 3: Rühr- und Schneidwerk
- 4: Druck-/Drehknopf
- 5: zentrale Steuereinheit
- 6: Touch-Display
- 7: Drückerfassungseinrichtung
- 8: Dreherfassungseinrichtung
- 9: Krafterfassungseinrichtung
- 10: Anzeigefelder
- 11: Bedeckung mit einem ersten Finger
- 12: Bedeckung mit einem zweiten Finger

## Patentansprüche

1. Elektrisch betreibbares Küchengerät (1) zur Zubereitung von Nahrungsmitteln mittels einer oder mehrerer Einwirkungseinrichtungen, wobei eine Einwirkungseinrichtung (3) mittels eines Dreh- und/oder Druckknopfes (4) aktivierbar und/oder einstellbar ist und das Küchengerät (1) hinsichtlich einer oder zugleich mehrerer oder aller aktivierten Einwirkungseinrichtungen (3) abschaltbar ist, **dadurch gekennzeichnet, dass** die Abschaltung der Einwirkungseinrichtung in Abhängigkeit einer Geschwindigkeit, mit welcher der Drehknopf (4) in Richtung seiner Drehachse oder in Drehrichtung oder in Gegendrehrichtung bewegt wird, auslösbar ist.

2. Elektrisches Küchengerät (1) zur Verarbeitung von Nahrungsmitteln mittels von einem Benutzer einstellbarer Verarbeitungsfunktionen, mit einer Einstelleinrichtung (4, 6) zum benutzerseitigen Einstellen wenigstens einer der Verarbeitungsfunktionen, wobei die Einstelleinrichtung ein Touch-Display (6) aufweist, **dadurch gekennzeichnet, dass** die Einstelleinrichtung (4, 6) derart ausgebildet und eingerichtet ist, dass sie zusätzlich zu dem benutzerseitigen Einstellen der Verarbeitungsfunktion auch eine benutzerseitige Aktivierung einer Notaus-Funktion bereitstellt, wobei die Notaus-Funktion mittels eines derartigen benutzerseitigen Berührens des Touch-Displays (6) aktivierbar ist, bei dem die Flächenbedeckung (11, 12) des Touch-Displays eine vorbestimmte Notaus-Flächenbedeckung überschreitet.

3. Elektrisches Küchengerät nach Anspruch 2, **dadurch gekennzeichnet, dass** die Einstelleinrichtung (4) eine erste Erfassungseinrichtung (7) zur Erfassung eines ersten Eingabeparameters und eine zweite Erfassungseinrichtung (9) zur Erfassung eines zweiten Eingabeparameters aufweist, wobei der erste Eingabeparameter von dem zweiten Eingabeparameter verschieden ist und mittels der ersten Erfassungseinrichtung (7) die Verarbeitungsfunktion einstellbar und mittels der zweiten Erfassungseinrichtung (9) die Notaus-Funktion aktivierbar ist.

4. Elektrisches Küchengerät nach Anspruch 3, **dadurch gekennzeichnet, dass** der zweite Eingabeparameter eine Eigenschaft des benutzerseitigen Einstellens des ersten Eingabeparameters ist.

5. Elektrisches Küchengerät nach einem der Ansprüche 2 bis 4, **dadurch gekennzeichnet, dass** die Einstelleinrichtung (4) einen Druckknopf aufweist, eine Impulsmesseinrichtung zur Erfassung des auf den Druckknopf benutzerseitig ausgeübten Impulses vorgesehen ist und die Notaus-Funktion bei Erfassung einer Überschreitung eines vorbestimmten Notaus-Impulses aktivierbar ist.

6. Elektrisches Küchengerät nach Anspruch 5, **dadurch gekennzeichnet, dass** der Druckknopf ein Druck-/Drehknopf (4) ist.

7. Elektrisches Küchengerät nach Anspruch 6, **dadurch gekennzeichnet, dass** die Einstelleinrichtung neben dem Druck-/Drehknopf (4) als Benutzerschnittstelle zusätzlich nur ein Touch-Display (6) aufweist.

8. Elektrisches Küchengerät nach einem der Ansprüche 2 bis 7, **dadurch gekennzeichnet, dass** die Notaus-Funktion eine unmittelbare Abschaltung des elektrischen Küchengeräts (1) bewirkt ohne das elektrische Küchengerät (1) ordnungsgemäß herunterzufahren.

## Claims

1. An electrically operable kitchen appliance (1) for preparing foodstuffs by means of one or more processing devices, wherein a processing device (3) can be activated and/or adjusted by a rotary knob and/or push-button (4), and the kitchen appliance (1) can be shut down with respect to one, or simultaneously a plurality or all, of the activated processing devices (3), **characterised in that**, the shut-down of the processing device can be triggered as a function of a speed with which the rotary knob (4) is moved in the direction of its axis of rotation, or in the rotational direction, or in the opposite rotational direction.

2. An electrical kitchen appliance (1) for processing foodstuffs by means of processing functions that can be adjusted by a user, with an adjustment device (4, 6) for purposes of adjusting at least one of the processing functions by the user, wherein the adjustment device has a touch screen (6), **characterised in that**, the adjustment device (4, 6) is designed and equipped such that, in addition to the adjustment of the processing function by the user, it also provides an activation of an emergency stop function by the user, wherein the emergency stop function can be activated by means of a touching of the touch screen (6) by the user, in which the surface area coverage (11, 12) of the touch screen exceeds a predefined emergency stop surface area coverage.

3. The electrical kitchen appliance in accordance with claim 2, **characterised in that**, the adjustment device (4) has a first detection device (7) for purposes of detecting a first input parameter, and a second detection device (9) for purposes of detecting a second input parameter, wherein the first input parameter differs from the second input parameter, and by means of the first detection device (7) the processing function can be adjusted, and by means of the second detection device (9) the emergency stop function can be activated.

4. The electrical kitchen appliance in accordance with claim 3, **characterised in that**, the second input parameter is a property of the adjustment by the user of the first input parameter.

5. The electrical kitchen appliance in accordance with one of the claims 2 to 4, **characterised in that**, the adjustment device (4) has a push-button, an impulse measuring device is provided for purposes of detecting the impulse exerted on the push-button by the user, and the emergency stop function can be activated when exceedance of a predefined emergency stop impulse is detected.

6. The electrical kitchen appliance in accordance with claim 5, **characterised in that**, the push-button is a push/turn button (4).

7. The electrical kitchen appliance in accordance with claim 6, **characterised in that**, the adjustment device, in addition to the push/turn button (4), only has a touch screen (6) as a user interface.

8. The electrical kitchen appliance in accordance with one of the claims 2 to 7, **characterised in that**, the emergency stop function effects an immediate shut-down of the electrical kitchen appliance (1), without an orderly power-down of the electrical kitchen appliance (1).

## Revendications

1. Appareil de cuisine (1) à fonctionnement électrique pour la préparation de denrées alimentaires au moyen d'un ou de plusieurs dispositifs de traitement, dans lequel un dispositif de traitement (3) peut être activé et/ou réglé au moyen d'un bouton rotatif et/ou poussoir (4) et l'appareil de cuisine (1) peut être arrêté eu égard à un ou à simultanément plusieurs ou tous les dispositifs de traitement (3) activés, **caractérisé en ce que** l'arrêt du dispositif de traitement est déclenchable en fonction d'une vitesse à laquelle le bouton rotatif (4) est déplacé dans la direction de son axe de rotation ou dans le sens de rotation ou dans le sens inverse de rotation.

2. Appareil de cuisine électrique (1) pour le traitement des denrées alimentaires au moyen de fonctions de traitement réglables par un utilisateur, comprenant un dispositif de réglage (4, 6) pour le réglage par l'utilisateur d'au moins l'une des fonctions de traitement, dans lequel le dispositif de réglage comporte un écran tactile (6), **caractérisé en ce que** le dispositif de réglage (4, 6) est conçu et réglé de manière que, en plus du réglage par l'utilisateur de la fonction de traitement, il procure également une activation par l'utilisateur d'une fonction d'arrêt d'urgence, dans lequel la fonction d'arrêt d'urgence est activable au moyen d'un contact de l'écran tactile (6) par l'utilisateur lors duquel la zone de couverture (11, 12) de l'écran tactile dépasse une zone de couverture d'arrêt d'urgence prédéterminée.

3. Appareil de cuisine électrique selon la revendication 2, **caractérisé en ce que** le dispositif de réglage (4) présente un premier dispositif de détection (7) pour détecter un premier paramètre d'entrée et un deuxième dispositif de détection (9) pour détecter un deuxième paramètre d'entrée, dans lequel le premier paramètre d'entrée est différent du deuxième paramètre d'entrée et la fonction de traitement est réglable au moyen du premier dispositif de détection (7) et la fonction d'arrêt d'urgence est activable au moyen du deuxième dispositif de détection (9).

4. Appareil de cuisine électrique selon la revendication 3, **caractérisé en ce que** le deuxième paramètre d'entrée est une propriété du réglage par l'utilisateur du premier paramètre d'entrée.

5. Appareil de cuisine électrique selon l'une des revendications 2 à 4, **caractérisé en ce que** le dispositif de réglage (4) comporte un bouton-poussoir, un dispositif de mesure d'impulsions est prévu pour détecter l'impulsion exercée par l'utilisateur sur le bouton-poussoir, et la fonction d'arrêt d'urgence est activable en cas de dépassement d'une impulsion d'arrêt d'urgence prédéterminée.

6. Appareil de cuisine électrique selon la revendication 5, **caractérisé en ce que** le bouton-poussoir est un bouton-poussoir rotatif (4).

7. Appareil de cuisine électrique selon la revendication 6, **caractérisé en ce que** le dispositif de réglage comporte uniquement un écran tactile (6) comme interface utilisateur en plus du bouton poussoir rotatif (4).

8. Appareil de cuisine électrique selon l'une des revendications 2 à 7, **caractérisé en ce que** la fonction d'arrêt d'urgence provoque un arrêt immédiat de l'appareil de cuisine électrique (1) sans arrêter méthodiquement l'appareil de cuisine électrique (1).
